# EUROPEAN PATENT APPLICATION

(11) **EP 3 514 416 A1**
(43) Date of publication of application: **24.07.2019**
(21) Application number: 17849981.0
(22) Date of filing: 08.09.2017
(51) Int. Cl.: F16J 15/46, F16J 15/48

(54) **INJECTABLE DYNAMIC PACKINGS**

(30) Priority: 13.09.2016 CL 02292016
(71) Applicant: Mulet Martinez, Mauricio, 1612070 Vallenar (CL)
(72) Inventor: Mulet Martinez, Mauricio, 1612070 Vallenar (CL)
(74) Representative: Herrero & Asociados, S.L.
(86) International application number: PCT/CL2017/050051
(87) International publication number: WO 2018/049542

(57) **Abstract**

The invention relates to a set of injectable packings, which are mounted in a multi-chamber arrangement with pressure boosters, which are dynamic, i.e. they have valves via which gas or liquid enters and valves via which gas or liquid leaves, and which are at different pressures. When the multi-chamber arrangement is being filled, gas or liquid enters the packings, and when the multi-chamber arrangement is being emptied, gas or liquid also passes out of the packings; it is necessary that they are dynamic due to the extremely high pressure. A flexible receptacle or bag can be provided, which goes inside each chamber, where the gas or liquid goes when it passes out of the packing. In addition, a manual check valve is provided via which all the liquid or gas is extracted, decompressing the assembly such that the parts can be easily dismantled. It is not necessary to apply high levels of torsional stress when installing or taking apart the mechanism, particularly when it is on such a large scale as in a multi-chamber arrangement.

## Description

Each of the chambers forming a multi-chamber, must have a lid and/or an external lid and, certainly, include a packing between each lid and chamber, and/or between each external lid and lid.

They may include a simple packing, i.e. not injectable, but it would be difficult to install it or disassemble it in order to tighten or remove the lids when the multi-chamber is assembled. The lids are mainly made of steel, having a large diameter and thickness that can easily weigh 300 kg, and it is also necessary that it has a considerable tightening, so that it is difficult to seal it with regular packings without gas or liquid.

The external lids, which are placed on top of the lids, are compressed, so that their function is fulfilled by simply superimposing the external lid. The same does not happen with the lids, that tend to open with the stresses of pressure and it is necessary to secure them in order to avoid leaking.

A simple packing, when the pressure is excessive and rises to ultra-high pressure, and when the pressure goes down or decreases to atmospheric pressure, changes its volume in a way that it becomes very hard to keep it hermetic within its very wide range of operation, ranging from over 4,000Mpa to atmospheric pressure.

In addition, the tightening is not consistent when they are bolted chambers, it is tighter in the place where the bolt is placed and it varies according to how much it is tightened. For example, a cylinder head with an engine block will work differently if the bolts are tightened differently because they became loose. It will not happen if it is injectable, because it will always be evenly supported.

It is recommended that injectable packings, which must be placed in the lids of a multi-chamber, besides being injectable are also dynamic, because they will be injected automatically through valves when the pressure in the multi-chamber rises, and releasing gas or liquid when the pressure in the multi-chamber decreases.

They are dynamic because, when the multi-chamber is in operation, liquid or gas is permanently being injected into the injectable dynamic packing when the pressure inside the chamber rises, and releases liquid or gas when liquid or gas is leaving the chamber, at different pressures according to the chamber it refers.

### BRIEF DESCRIPTION OF THE DRAWINGS

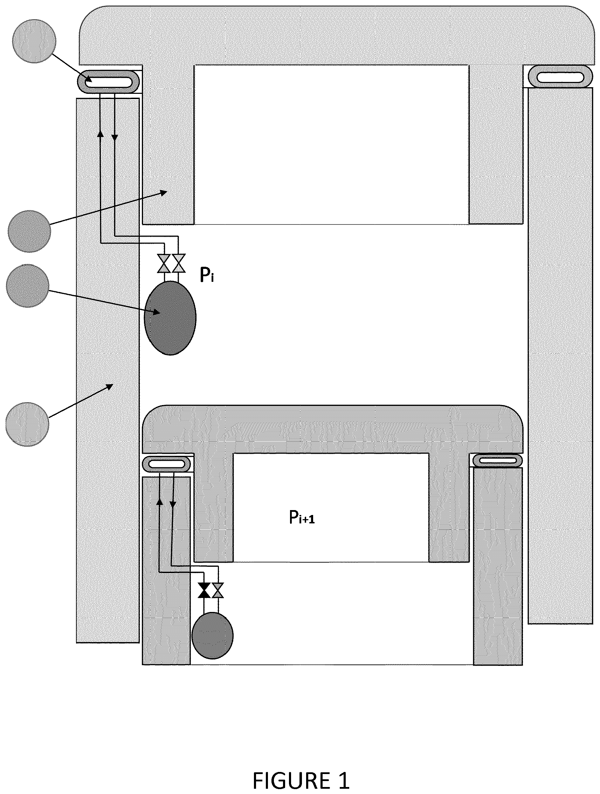

Drawing No. 1 shows the injectable dynamic packing (30), which is loaded with pressurized gas or liquid every time the multi-chamber is being loaded, and unloaded every time the multi-chamber is being unloaded. It is a multi-chamber made of tubes with lids that carry the injectable dynamic packing. The drawing shows half of two chambers, that can be 5 or 10.
10: Injectable dynamic packing
20: Tube
30: Lid
40: Flexible recipient

### DETAILED DESCRIPTION OF THE INVENTION

A multi-chamber in which chambers are installed, ones inside the others, in a way that the inside chambers withstand a pressure exceeding the yield stress of the construction material itself; having injectable dynamic packing installed therein.

They are dynamic and injectable because, when the multi-chamber is in operation, liquid or gas is permanently being injected into the packings when the pressure inside the chamber rises, or releases liquid or gas from the packing when liquid or gas is leaving the chamber, at different pressures according to the chamber it refers.

It must have at least one injectable packing in the lids of each chamber, at different pressure:
Gas or liquid is injected into the packing automatically when the pressure inside a chamber is rising, so that the packing that is located deeper inside a multi-chamber will have more pressure, and the packing that is located more in the surface will have less pressure. When the pressure in the multi-chamber decreases, it will be necessary to lower the pressure in the packing as well.

Every inlet valve that enters any given chamber may have two discharge lines: one introducing gas or liquid into the chamber, and a check valve that introduces gas or liquid into the packing, in a way that the packing will always have the pressure of the liquid entering the chamber.

It is injected into the packing of a chamber i through the valve Xi every time the multi-chamber operates at ultra-high pressure and leaving through valve Yi of retention P of the packing, which unloads at a lower pressure withholding P when the multi-chamber is being decompressed, maintaining the internal pressure of the packing that has a higher value to the pressure inside chamber i-1.

It is a packing having each chamber and must operate injecting more pressure or releasing gas or liquid inside of it every time the pressure on the multi-chamber is rising or decreasing. In the event it rises to ultra-high pressure Pa in the interior chamber, the packings will have a certain amount of gas or liquid; however, if they are at a different pressure Pb, they will have a different amount of gas or liquid.

If the gas or liquid is kept inside and there is no valve where the liquid or gas can be released from the packing, it will tend to burst every time the pressure inside the chamber decreases. It must include a discharge valve so that it will not accept more than a relative pressure inside the packing.

Gas or liquid enters the packing when gas or liquid starts entering the multi-chamber, which can be the other gas or liquid of the packing, and it is kept in flexible bags outside the packing but inside the chambers. The pressure of the packing will tend to decrease when the pressure of the chambers starts to decrease.

## Claims

1. Sealing gaskets or packings of any material, which go between a lid and the receptacle, each having at least one toroidal fold, or toroidal balloon, having valves where gas or liquid enters o leaves, which can be injected once they are installed, where a small flexible recipient filled with liquid or gas can be connected to it, inside the chamber or conduit therein; CHARACTERIZED;
1.- in that the packings (10) are automatically injected every time the pressure of the chamber where they are located increases; with gas or liquid from the chamber or flexible recipient (40), which cannot be the same gas or liquid located in the multi-chamber, and that are released every time the pressure decreases, into the flexible recipient when applicable.
2.- in that during the mounting, it is not necessary that the tightening be too hard, but rather, once the pressurized liquid or gar is injected, it can enter and leave the packing through the valves that are available; a check valve where it enters, and an outlet valve at ΔP in a way that it does not burst; it may also have a manually operated check valve to drain all the liquid or gas, decompressing the packing (10) and disassembling the pieces easily.
3.- in that they are installed while the packings (10) are empty, and after being installed and ready to operate the filling is initiated, followed by the draining of the packings, together with the process of loading and unloading pressurized gas or liquid of the multi-chamber.
4.- in that the fluid that enters and leaves the packing goes in a flexible recipient (40) that is located outside the packing, connected by small tubes that may have valves, so that when fluid leaves or enters the interior of the packing, it is done automatically from the flexible bag or recipient.
